Europäisches Patentamt

European Patent Office

Office européen des brevets

(19)

(11) Publication number: **0 099 541**
**B1**

(12) **EUROPEAN PATENT SPECIFICATION**

(45) Date of publication of patent specification: 01.06.88

(21) Application number: 83106812.7

(22) Date of filing: 11.07.83

(51) Int. Cl.⁴: **G 06 G 1/00,** A 23 G 9/22,
A 23 L 3/36

(54) Slide rule for calculating the working and freezing parameters of refrigerating equipment.

(73) Proprietor: INDESIT INDUSTRIA
ELETTRODOMESTICI ITALIANA S.p.A.
Str. Piossasco Km 17
I-10040 Rivalta Turin (IT)

(72) Inventor: Aponte, Antonio
Viale Colli Amidei, 50
I-80100 Napoli (IT)
Inventor: Del Mastro, Piero
Via Pigafetta, 44
I-10100 Torino (IT)
Inventor: Mele, Massimo
Via Garzelli, 72
I-80100 Napoli (IT)

(74) Representative: Prato, Roberto et al
c/o Ingg. Carlo e Mario Torta Via Viotti 9
I-10121 Torino (IT)

(30) Priority: 23.07.82 IT 6794182

(43) Date of publication of application:
01.02.84 Bulletin 84/05

(45) Publication of the grant of the patent:
01.06.88 Bulletin 88/22

(84) Designated Contracting States:
DE FR GB NL SE

(56) References cited:
GB-A- 651 756
GB-A-1 207 798

INTERNATIONAL JOURNAL OF
REFRIGERATION, vol. 1, no. 1, May 1978,
Guildford, Surrey (GB); G.LORENTZEN: "Food
preservation by refrigeration, a general
introduction", pp. 13-26

EP 0 099 541 B1

Courier Press, Leamington Spa, England.

## Description

The present invention relates to a refrigerating appliance, in particular household freezer, having a freezer compartment to preserve different kinds of foods.

In order to calculate the working and freezing parameters of a refrigerating equipment, in particular household refrigerators and/or freezers, the only information shown on the rating plate of either 2-door refrigerators (i.e. with a fresh food compartment above zero and a freezer compartment below zero, one on top of the other) or freezers (i.e. with a single below-zero compartment for long-term storage of frozen food) is the maximum amount of food in kilograms that can be frozen every 24 hours' operation of the appliance. The said number of kilograms is calculated on the basis of a standard food item (lean beef), though not all foods react to freezing in the same way.

Different foods require different freezing times and temperatures depending on the amount of latent freezing heat they contain (similar to the latent evaporating heat of a fluid) i.e. the number of calories to be removed from the food at freezing temperature if it is to be frozen properly, which, in turn, depends on the percentage of water contained in the food.

Freezers and 2-door refrigerators are therefore currently being operated wrongly with a considerable waste in energy.

As only the maximum freezing capacity per 24 hours is shown on the rating plate, users are compelled to set the freeze control on the appliance to 24 hours (a heavy burden on the compressor) even when storing away much smaller amounts.

Users are not placed in a position whereby they can calculate the length of time required to freeze the food and so disconnect the freeze control before the set 24 hours expires and so avoid a pointless waste in energy. Similarly, users cannot calculate the time needed to freeze foods which are easier to freeze than the sample item and thus require much less than the set 24 hours.

The aim of the present invention is to provide a refrigerating appliance provided with data, based on experimental tests, for calculating the actual freezing time of different types of food depending on the different characteristics of each one.

A further aim of the present invention is to provide a refrigerating appliance provided with data, based on experimental tests, for calculating the freeze times and/or amounts of food which can be frozen in 24 hours.

A further aim of the present invention is to provide a refrigerating appliance provided with data for calculating the electricity consumption according to the type of refrigerator and/or freezer employed.

A further aim of the present invention is to provide a refrigerating appliance showing how to set the thermostat in the appliance according to room temperature.

With these aims in view, the present invention relates to a refrigerating appliance, in particular household freezer, having a freezer compartment to preserve different kinds of foods, characterised in that a sliderule for calculating the operating parameters of the appliance, is located inside said freezer compartment, said sliderule comprising at least one fixed part and one moving part, and a thermometer firmly fitted to one of said parts, that a first one of said operating parameters is the weight of a food and a second one of said parameters is the freezing time, and that a first one of said parts is fitted with at least a first scale with values of one of said operating parameters, used as first input data for the said calculation, and at least a second scale with values of another of said operating parameters; and that the second of said parts is designed to conceal the said second scale and is provided with at least one marker and windows with values of a further parameter, used as second input data, printed in correspondence of windows, for revealing through each window at least one value on the said second scale as output data when the said marker is set to a value on the said first scale or vice versa.

The invention will now be described, by way of a non-limiting example, with reference to the attached drawings in which:

Fig. 1 shows a plan view of the sliding rule forming part of the present invention;

Fig. 2 shows the Fig. 1 sliding rule turned through 180°;

Fig. 3 shows two food charts, a and b, classified according to latent freezing heat content.

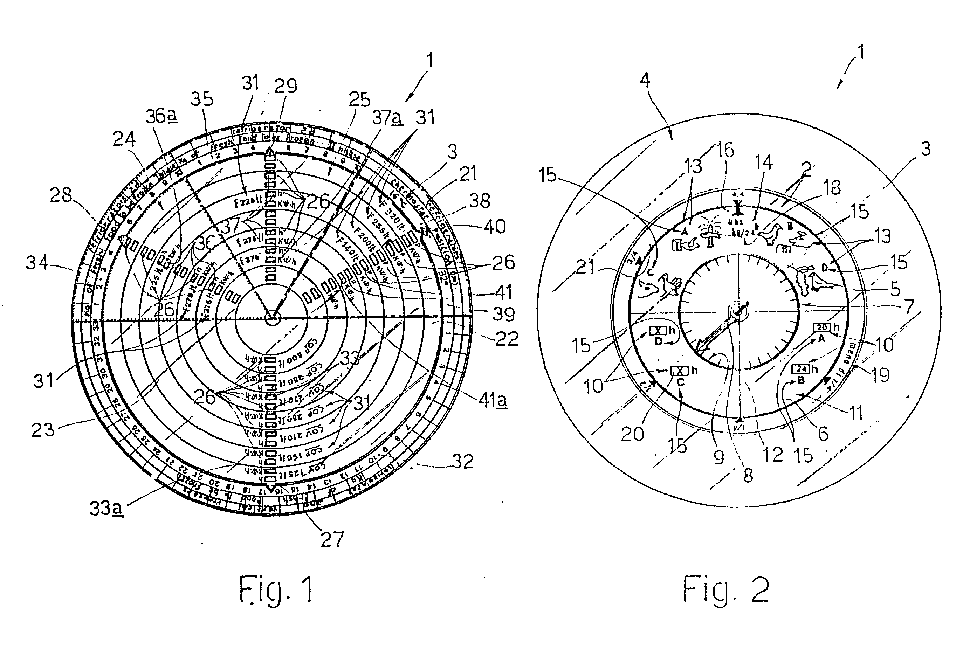

Number 1 in Figure 1 and 2 indicates a sliding rule for calculating the operating and freezing parameters of freezers and refrigerators, particularly 2-door refrigerators with a freezer compartment. Sliding rule 1 consists of a combination of two separate sliding rules, 2 and 3, fitted to each other at the back. Both sliding rules 2 and 3 are circular and concentric but sliding rule 3 is larger in diameter than sliding rule 2. The latter is fitted on flat rear face 4 of sliding rule 3 and comprises two mutually operating parts: a fixed circular part or disc 5 and a concentric circular part or disc 6, smaller in diameter than disc 5 and assembled so as to turn in relation to it. Disc 5 may be made in one piece with face 4 or fitted to it in any convenient manner, whereas disc 6 is fitted to part 5, e.g. by means of a pin not shown in the diagram. Sliding rule 2 also comprises a thermometer 7 of any known type, e.g. an analogue thermometer comprising a needle 8 and a graduated circular face 9, fitted concentrically on to discs 5 and 6 and integral with either one.

Disc 6 is provided with 4 rectangular windows 10 arranged concentrically round the bottom half of its circumference 12 near the outside edge 11, as well as 4 tables 13 arranged in the top half of the disc on face 14. Tables 13 and windows 10 are marked in the example shown by letters of the alphabet 15.

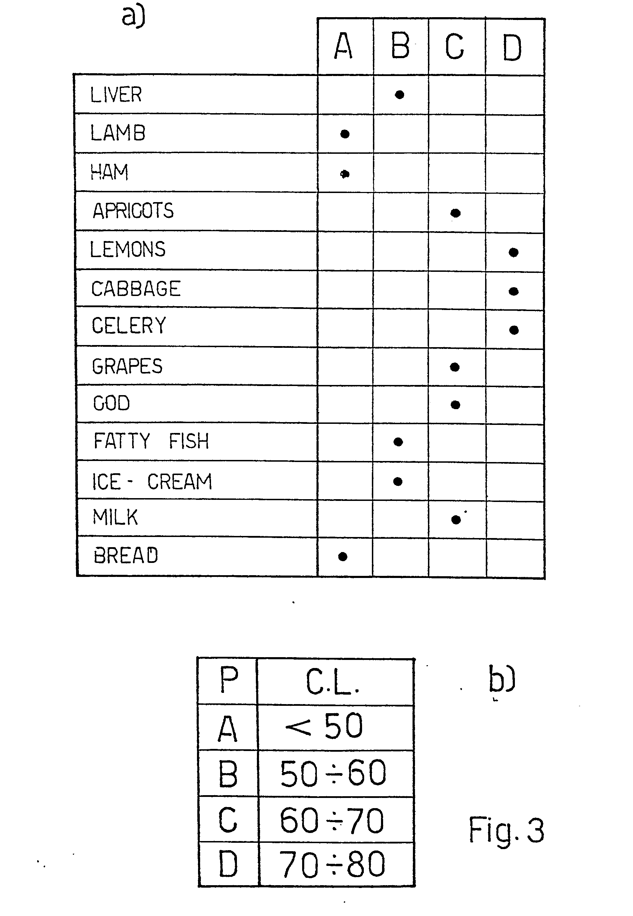

Each table 13 is marked in the same way 15 as one of windows 10 to indicate a similar category of food, classified according to water content or latent freezing heat. In the example shown, tables 13 are marked A, B, C and D in the same way as windows 10. In Fig. 3, letters A, B, C, and D refer to the food division shown in table *b*, in which A indicates food (P) with a latent freezing heat content (C.C.) below 50 Kcal/kg, B food with a latent heat content ranging from 50 to 60 Kcal/kg, C food ranging from 60 to 70 Kcal/Kg and D food ranging from 70 to 80 Kcal/kg. By way of an example, the dots in table *a* of Fig. 3 show which of the above categories a number of commonly used foodstuffs belong to. In tables 13, these foodstuffs are shown either by a list of names or, as in the example, by symbols showing users of sliderule 2 which food categories letters A, B, C and D 15 refer to. To make things easier for the user, a variation not shown in the diagram provides for eliminating letters 15 and tables 13 are arranged separately each next to the window 10 it refers to. In this case, tables 13 are also arranged in the bottom half 12 of disc 6 next to their respective windows 10 or, alternatively, both windows 10 and their respective tables 13 are spread out over a wider arc to occupy both the top and bottom 12 of disc 6.

The latter is also provided with a reference mark 16 with a plate 18 underneath showing a preset weight of food, depending on the type of freezer being used. Disc 5 has a first 19 and second 20 number scale the numbers of which are arranged on a circumference concentric with disc 6 on the outside edge 21 of disc 5. Scale 19 shows five fractions of the abovementioned preset weight of food shown on plate 18: 4/4, 3/4, 2/4, 1/4 and less than 1/4.

Scale 20 shows the experimented minimum freeze times of various types of food expressed in various numbers of hours which can only be seen through windows 10 in that the diameter of disc 6 covers scale 20.

Sliderule 2 is used for calculating the freeze time of food placed inside a known type of freezer, not shown in the diagram, with a hand-operated control for keeping the compressor on the cooling circuit running (freeze setting) so as to freeze a preset weight of food in 24 hours when the abovementioned control is turned on. The said quantity of food, expressed in kilograms, depends on the type of freezer and is therefore indicated by the maker on the appliance plate.

This weight is copied either by the user or the maker into the space provided on plate 18 so as to associate each value on scale 19 with a specific weight of food. For example, if the maximum capacity of the freezer (shown on plate 18) is 12 Kg/24 hours, the 4/4 setting corresponds to 12 Kg of food being frozen in the freezer; the 3/4 setting corresponds to a weight of 12 Kg divided by 4 and multiplied by 3=9 Kg and so on.

Supposing the user wants to freeze 12 Kg of food type A (see table 3*a*) e.g. ham and lamb. Normally, the user would load the food into the freezer, turn on the freeze control and wait 24 hours before turning it off. Using sliderule 2, however the user can calculate the exact freeze time required and, if this is less than 24 hours, turn the control off sooner so as to cut down on energy consumption. Assuming the maximum capacity shown on plate 18 is 12 Kg, all the user has to do is set mark 16 to 4/4 on scale 19 (the weight of food being frozen in this case is the same as the maximum capacity of the freezer) and read the number of hours for freezing shown in window 10 marked A (relative to type A foodstuffs which are also shown on table 13 marked A). In Fig. 2, the number of hours needed is 20, after which time, the food will be frozen and the freeze control can be turned off.

If, on the other hand, the food being frozen is liver and ice-cream, for example, the user will read the scale 19 value shown in window 10 marked B. If, instead of a number, the user sees an asterisk (or other symbol) in window 10, this means that the chosen weight of the product in question requires more than 24 hours for freezing and must therefore be frozen in more than one operation.

Similarly, for lighter weights (e.g. 9 kg, or 3/4 of maximum capacity) or foods all belonging to group A, the freeze times shown will be even lower (15.5 hours) so that C and/or D type foods with a greater latent freezing heat content than lean beef may also be frozen within the same 24 hours. Essentially speaking, when marker 16 is set to a given value on scale 19, the corresponding freeze times of the same amounts of each type of food are shown at the same time in windows 10 of scale 20.

Thermometer 7, which is preferably fitted to disc 6 but which may also be fitted to sliding rule 3, has essentially psychological function in that it enables the user to read and keep a check on the temperature inside the freezer during both the freezing stage and normal operation of the freezer. Also, to use the thermometer, the user must place sliding rule 1 inside the freezer and, having the sliding rule readily at hand whenever freezer is opened and loaded, is induced to use it. This prevents the possibility of users not making use of the sliding rule, which commonly occurs in the case of ordinary freeze tables which are usually thrown away or lost or placed where they are never used.

Sliding rule 3 operates and may be used separately from sliding rule 2 for calculating electricity consumption freeze times and the amount of food which can be frozen in either freezers or refrigerators.

Though the weight of food that can be frozen in 2-door refrigerators is lower than that of a freezer, tests have shown that, by dividing the amount of food to be frozen in 24 hours into two or more parts, which are then frozen in successive stages, still totalling 24 hours, the weight of food that can be frozen may be increased considerably. The main function of sliderule 3 is therefore to enable the user to calculate the length of the first freezing stage, given the weight of food placed inside the freezer, and so calculate how much food can be frozen in subsequent stages within the said 24 hours.

Sliderule 2 (fig. 1) consists of a disc 21 with the abovementioned rear face 4 on which sliderule 2 is fitted and a second disc 22 concentric with disc 21 but smaller in diameter and fitted so as to turn round it. Disc 22 is divided into four sections 23, 24, 25, 38 each with a number of windows or rectangular openings 26 and respective markers 27, 28, 29, 40. Windows 26 of each section 23, 24, 25, 38 are arranged along a radius of disc 22 for revealing numbers on the underlying scales on disc 21 convered by disc 22. Windows 26 of each section 23, 24, 25, 38 are also marked 31 to distinguish between different types of refrigerators and freezers with different loading and cooling capacities.

Disc 21 has a number scale 32 showing the weight of food that can be frozen, considered as a total and not subdivided into categories with different latent freezing heat contents.

The weights (kilograms) shown on scale 32 therefore refer to a sample food (lean beef) with an average latent freezing heat content. Scale 32 is located in section 23 of disc 22 on the outside edge of disc 21 so as to be swept by marker 27. A further set of number scales (33, 33a) is fitted underneath disc 22, concentric with scale 32, for showing the minimum times (in hours) required for freezing the amounts of food shown on scale 32 using different types of freezers, and the energy consumption associated with each freeze time. Scales 33 and 33a are worked out experimentally.

The outside edge of disc 21 has a further number scale 34 located in section 24, a number scale 35 in section 25, next to scale 34, and a number scale 39 in section 38, next to scale 35. Scale 34 shows the weight of food that can be frozen in the first stage of a 2-door refrigerator, and scale 35 the weight of food that can be frozen by the same 2-door refrigerator in a second stage immediately following the first and terminating within 24 hours from the start of the said first stage. Next to scales 34 and 35, swept by markers 28 and 29 and concentric with them, disc 21 is fitted with number scales 36 and 37 which are covered by disc 22 and can be read through windows 26 in sections 24 and 25. Scale 36 shows the minimum times required for freezing the amounts of food shown on scale 34 using different types of 2-door refrigerators, the said scale 36 being worked out experimentally.

Scale 37 depends on the length of the first freezing stage and is used for determining, on scale 35, the maximum amount of food that can be frozen in the second stage, at the same time ensuring that the food frozen in the first stage is kept roughly below −15°C (the minimum temperature above which frozen food may deteriorate even in a short time). Scale 37 is expressed in hours based on the corresponding values on scale 36 to which a standard preset time of four hours, calculated experimentally, is always added. Tests, in fact, have shown that loading food at room temperature into the freezer compartment of a refrigerator in which other food has only just been frozen can raise the temperature inside the freezer so as to damage the frozen food inside by raising its temperature over −15° C. A certain length of time (calculated to be four hours) must therefore be allowed to pass before placing unfrozen food inside the freezer. When freezing food in successive stages, therefore, the second stage does not commence as soon as the food inside the freezer has been frozen but only after its temperature has fallen low enough to ensure that the minimum temperature will not be exceeded even if fresh food is placed inside the freezer before the 24 hour term expires. Consequently, whereas scale 36 shows the freeze times for food placed inside the freezer in the first stage, scale 37 shows the total time of stage one, plus the set four hours, after which the second stage may be commenced.

Number scale 39 shows room temperatures within a preset range, e.g. +16°C to +32°C. Beneath disc 22, disc 21 has a set of scales 41, 41a concentric with scale 39 and which can be read through windows 26 in section 38. Scales 41 are indicated in full by means of letters or numbers (e.g. MIN, MED, MAX) to show the correct minimum consumption setting of the thermostat on the refrigerator as a function of room temperature. Number scales 41a show the energy consumption of each thermostat setting on scales 41 as a function of room temperature. Both scales 41 and 41a are worked out experimentally. Sliderule 3 is used for regulating both freezers and 2- or single door refrigerators. In the case of a freezer with a freeze control, the user turns disc 22 to set marker 27 to the required food weight on scale 32, and then reads the required freeze time (in hours) on one of scales 33 in window 26 bearing the reference number 31 of the type of freezer being used. After the said freeze time expires, the control may be turned off. If freeze time is less than 24 hours, this arrangement provides for considerable saving in energy as compared with the current system whereby the control (and consequently also the compressor) is kept running regardless for 24 hours. The user can also read on the corresponding 33a scale the electricity consumption in kilowatt-hours of the freeze time shown on scale 33.

In the case of a 2-door refrigerator, the user sets marker 28 to the first stage food weight on scale 34 and then reads the minimum freeze time required (in hours) on one of scales 36 in window 26 bearing the reference number 31 of the type of refrigerator being used. At this point, if the user wishes to place more food inside the freezer within the next 24 hours, he or she must add 4 hours to the time shown previously and, by turning disc 22, read the time shown on scale 37 in window 26, section 25, bearing the same reference number 31 as window 26, section 24, from which the previous reading was made.

When this reading is made on the corresponding scale marked 37, marker 29 on scale 35 will show the amount of food in kilograms that can be frozen in a second stage starting from the end of the four hours added on to the first stage and within the total 24 hours calculated from the start of the said first stage.

In the example shown in Fig. 1, scales 36 and 37 on sliderule 3 are provided with scales 36a and 37a showing the experimented energy consumption of the refrigerator in kilowatt-hours.

In this way, the user can also read in section 24, besides the freeze time, the amount of energy required for freezing and, in section 25, besides the weight of food that can still be frozen, the amount of energy required for a second freeze stage. Given a specific weight of food for freezing, the user can thus calculate how best to divide it up to obtain a minimum total freeze time and minimum consumption for a given weight or the maximum amount of frozen food for a given consumption, i.e. minimum specific consumption in kilowatt-hours per Kg of food. For example, 8 Kg of food can be frozen in a refrigerator marked F 375 (see Fig. 1), though the 24 hour freezing rate shown on the plate is 5 Kg, by dividing the load into a first portion of 5 Kg (frozen in 11 hours) followed 15 hours later (11+4) by another 3 Kg of food to give a total consumption of about 2700 kilowatt-hours. Alternatively, the load may be divided up so as to give a total freeze time of less than 24 hours so that more food, totalling 9 Kg for example, may be frozen with the same consumption of 2700 kilowatt-hours.

In the case of 2-door refrigerators, the user can work out the correct setting for the fresh-food compartment thermostat as a function of room temperature. To do this, all he or she has to do is turn disc 22 to set marker 40 to the value on scale 39 corresponding to the temperature of the room the refrigerator is operating in and read in window 26 bearing the reference number 31 of the refrigerator being used the correct thermostat setting (e.g. MED) shown on alphabetical scale 41 and the energy consumption associated with the thermostat setting on scale 41a.

The advantages of the present invention will be clear from the description given. In particular, it provides to the users of refrigerators and/or freezers an easy-to-use instrument supplying with all the information needed for correct operation of the appliance, for limiting and/or reducing the energy consumption of the appliance and/or increasing performance by freezing large quantities of food with guaranteed safety.

The major advantage of the invention, however, is that it provides for freezing much larger quantities of food than that shown on the maker's plate on the freezer with no substantial increase in energy consumption.

To those skilled in the art it will be clear that various changes can be made to the invention described by way of a non-limiting example without, however, departing from the scope of the said invention.

## Claims

1. Refrigerating appliance, in particular household freezer, having a freezer compartment to preserve different kinds of foods, characterised in that a sliderule (1, 2, 3) for calculating the operating parameters of the appliance, is located inside said freezer compartment, said sliderule comprising at least one fixed part (5, 21) and one moving part (6, 22), and a thermometer (7) firmly fitted to one of said parts (5, 6, 21, 22), that a first one of said operating parameters is the weight of a food and a second one of said parameters is the freezing time, and that a first one of said parts (5, 21) is fitted with at least a first scale (19, 32, 34, 35, 39) with values of one of said operating parameters, used as first input data for the said calculation, and at least a second scale (20, 33, 36, 37, 41) with values of another of said operating parameters; and that the second of said parts (6, 22) is designed to conceal the said second scale (20, 33, 36, 37, 41) and is provided with at least one marker (16, 27, 28, 29, 40) and windows (10, 26) with values of a further parameter, used as second input data, printed in correspondence of windows, for revealing through each window at least one value on the said second scale (20, 33, 36, 37, 41) as output data when the said marker (16, 27, 28, 40) is set to a value on the said first scale (19, 32, 34, 35, 39) or vice versa.

2. Refrigerating appliance according to Claim 1, with said sliderule (2) adapted for calculating the freeze times of food placed inside a freezer with a freeze control and designed to freeze a set weight of food in 24 hours when the said control is turned on, characterised by the fact that the said first scale (19) is for fractions of the said preset weight of food and that the said second scale (20) is for minimum freeze times required for freezing different fractions of the said preset weight when the said control is turned on.

3. Refrigerating appliance according to Claim 2, characterised by the fact that the said first (19) and second (20) scales are concentric and parallel to the circular edge (21) of a first disc (5) with a preset diameter, the said first disc (5) being fitted with a second concentric disc (6), smaller in diameter than the first and moving round it, so as to conceal the second scale (20) and fitted with a marker (16) complete with a plate (18) showing the said preset weight of food and with a number of rectangular windows (10) arranged round a circumference concentric with the said first disc (5) for revealing simultaneously a number of values on the said second scale (20) when the said marker (16) is set to a value on the said first scale (19), each of the said windows (10) being marked (15).

4. Refrigerating appliance according to Claim 3, characterised by the fact that one face (14) on one (6) of the said discs (5, 6) bears a number of tables (13), one for each of the said windows (10), each table (13) being marked (15) in the same way as a corresponding window (10) for indicating a homogeneous food category classified according to water content.

5. Refrigerating appliance according to Claim 3, characterised by the fact that one face (14) on the said second disc (6) bears a table (13), next to each of the said windows (10), indicating a given category of food classified according to water content.

6. Refrigerating appliance according to Claim 4 or 5, characterised by the fact that the said tables (13) indicate foodstuffs with a latent freezing heat content of below 50 Kcal/Kg, or ranging from 50 to 60, or 60 to 70, or 70 to 80 Kcal/Kg.

7. Refrigerating appliance according to any of the Claims from 4 to 6, characterised by the fact that the said tables (13) show food symbols.

8. Refrigerating appliance according to any of the Claims from 4 to 6, characterised by the fact that the said tables (13) consist of lists of food names.

9. Refrigerating appliance according to Claim 1, with said sliderule (3) adapted for calculating the freeze times of first quantities of food, expressed by weight, placed inside the freezer compartment of a twin-compartment refrigerator and for calculating how much extra food may be frozen in the said freezer after the said first quantities and within the space of 24 hours, characterised by the fact that the said first scale (34) is for the said first quantities of food frozen in a first stage and that the said second scale (36) is for the freeze times of the said first quantities of food; the said first part (21) being fitted with a third scale (35) for the said extra quantities of food frozen in stages subsequent to the said first stage, with a number of said second scales (36), each referring to a different type of refrigerator, and with a number of fourth scales (37) showing the length of the said first stage; the values on the said fourth scales (37) corresponding to values on the said second scales (36) plus a preset amount; and the other said part (22) being provided with a first (28) and second (29) marker and at least one window (26) for each of the said second (36) and fourth (37) scales for revealing a value on the said second and fourth scales when the said first (28) and second (29) markers are set to values on the said first (34) and third (35) scales respectively, the said windows (26) being marked (31) to show the type of refrigerator the values on the corresponding second (36) and fourth (37) scale refer to.

10. Refrigerating appliance according to Claim 9, characterised by the fact that the said first (34), third (35), second (36) and fourth (37) scales are concentric and parallel to the circular edge of a third disc (21) with a preset diameter, the said third disc (21) being fitted with a fourth concentric disc (22), smaller in diameter and movable in relation to the third (21) for concealing the said second (36) and fourth (37) scales, the first (34) and third (35) scales being adjacent to a first (24) and second (25) section on the said fourth disc (22), the said sections being provided with the said first (28) and second (29) markers respectively and with a first and second set of the said windows (26); the said windows (26) in the said first section (24) being designed to reveal, when the said first marker (28) is set to a value on the said first scale (34), the values on the said second scales (36) relative to the times required for freezing, in the said first stage, the amount of food shown by the first marker (28) on the said first scale (34), and the said second marker (29) being designed to show, on the said third scale (35), the amount of food that can be frozen in subsequent stages, when the said windows (26) in the said second section (25) are arranged so as to reveal the values on the said fourth (37) scales corresponding to the values on the said second scales (36) disclosed previously in windows (26) in the first section (24) when the said first marker (28) was set.

11. Refrigerating appliance according to Claim 1, with said sliderule (3) adapted, for calculating the freeze times of food placed inside a freezer, characterized by the fact that the said first scale (32) is for the weight of food being frozen and the said second scale (33) for the time taken to freeze the said weight of food.

12. Refrigerating appliance according to Claim 11, characterised by the fact that the sliderule (3) comprises a third disc (21), with a preset diameter, on which are fitted concentrically and parallel to its circular edge the said first scale (32) and a number of said second scales (33), each referring to a different type of freezer; and a fourth disc (22), smaller in diameter and movable in relation to the third (21), with a said window (26) for each of the said second scales (33) and the said marker (27), for concealing the said second scales (33), the said windows being arranged along a radius of the said fourth disc (22) and marked (31) to show different types of freezers.

13. Refrigerating appliance according to Claim 1, with said sliderule (3) adapted, for calculating the correct setting of a refrigerator thermostat as a function of room temperature for minimising the energy consumption of the said refrigerator, characterised by the fact that the said first scale (39) is for room temperatures within a preset range and that the said second scale (41) has alphabetical references showing the various settings of the said thermostat.

14. Refrigerating appliance according to Claim 13, characterised by the fact that the sliderule (3) comprises a third disc (21), with a preset diameter, fitted concentrically with the said first scale (39) parallel to its circular edge and with a number of the said second scales (41), each relative to a different type of refrigerator, and a fourth disc (22), smaller in diameter and movable in relation to the third (21) for concealing the second scales (41), and provided with one of the said windows (26) for each of the said second scales (41) and the said marker (40), the said windows (26) being arranged along a radius of the said fourth disc (22) and a marked (31) to show different types of refrigerators.

15. Refrigerating appliance according to any of Claims 10 to 14, characterised by the fact that the said third disc (21) is fitted with fifth scales (32a, 36a, 37a, 41a) associated respectively with the said second (33, 36, 41) and fourth (37) scales for showing the experimented energy consumption in kilowatt-hours required for obtaining the performance shown on the second (32, 34, 39) and third (35) scales, the said fourth disc (22) concealing the said fifth scales (33a, 36a, 37a, 41a) with windows (26) for revealing the values on the said fifth scales (33a, 36a, 37a, 41a) together with the values on the said second (33, 36, 41) and fourth scales.

**Patentansprüche**

1. Elektro-Haushaltskühlschrank, insbesondere Haushalts-Tiefkühlschrank mit einem Gefrierfach zur Konservierung von verschieden Lebensmittelarten, dadurch gekennzeichnet dass im Innern des Gefrierfaches ein Rechenschieber (1, 2, 3) zum Errechnen des Betriebsparameters vorgesehen ist, wo der Rechenschieber mindestens ein festes (5, 21) und ein bewegliches Teil (6, 22), sowie ein fest an den Teilen (5, 6; 21, 22) angebrachtes Thermometer (7) enthält und dass ein erster dieser Betriebsparameter das Gewicht eines Nahrungsmittels und der zweite die Gefrierzeit ist und dass eines der Teile (5, 21) mit den Werten einer dieser Betriebsparameter aufweist, die als erste Eingabedaten für die Errechnung benötigt werden und dass das zweite Teil (6, 22) dazu vorgesehen ist die zweite Skala (22, 33, 36, 37, 41) zu überdecken und mindestens eine Markierung (16, 27, 28, 29, 40), sowie Fenster (10, 26) mit Werten eines weiteren als zweite Eingabedaten verwendeten Parameters aufweist, die in den Fenstern erscheinen und durch jedes Fenster mindestens einen Wert auf der zweiten Skala (20, 33, 36, 37, 41) als Ausgabedaten erfassen, wenn die Markierung (16, 27, 28, 40) auf einen Wert an der ersten Skala (19, 32, 34, 35, 39) oder umgekehrt eingestellt ist.

2. Haushalts-Elektrokühlschrank nach Anspruch 1 mit einem Rechenschieber (2) zum Errechnen der Gefrierzeiten der im Innern eines mit Kontrolle versehenen Gefrierfaches untergebrachten Lebensmittel und dazu vorgesehen ein vorbestimmtes Lebensmittelgewicht innerhalb 24 h nach eingeschalteter Kontrolle einzufrieren, dadurch gekennzeichnet dass die erste Skala (19) für Bruchteile des vorgesehenen Nahrungsmittelgewichtes dient und dass die zweite Skala für die Mindestgefrierzeit dient um unterschiedliche Bruchteile des vorgesehenen Gewichtes einzufrieren nachdem die Kontrolle eingeschaltet wurde.

3. Haushalts-Elektrokühlschrank nach Anspruch 2, dadurch gekennzeichnet dass die erste (19) und zweite Skala (20) konzentrisch und parallel am Rand einer ersten Scheibe (5) mit vorgegebenem Durchmesser montiert ist, wo die erste Scheibe (5) mit einer zweiten Scheibe (6) mit kleinerem Durchmesser als die erste versehen ist und sich um diese so bewegt, dass die zweite Skala (20) überdeckt wird und eine Markierung (16) mit einer Platte (18) aufweist, auf der das vorgegebenen Nahrungsmittelgewicht hervorgeht, sowie mehrere rechteckige Fenster (10), die mit der ersten Scheibe (5) um einen konzentrischen Kreis angebracht sind, um zusammen mehrere Werte auf der zweiten Skala (20) anzuzeigen, wenn die Markierung (16) auf einen Wert der ersten Skala (19) eingestellt ist und jedes der Fenster (10) gekennzeichnet ist (15).

4. Haushalts-Elektrokühlschrank nach Anspruch 3, dadurch gekennzeichnet dass eine Seite der Scheiben (5, 6) mehrere Tabellen (13), eine für jedes Fenster (10) aufweist, wo jede Tabelle auf die gleiche Weise (15) durch ein Fenster (10) gekennzeichnet ist um eine homogene Kategorie von je nach Wassergehalt klassifizierten Nahrungsmittels anzugeben.

5. Haushalts-Elektrokühlschrank nach Anspruch 3, dadurch gekennzeichnet dass eine Seite (14) der zweiten Scheibe (6) eine Tabelle (13) in der Nähe jedes der Fenster (10) aufweist, aus der eine bestimmte Kategorie von je nach Wassergehalt klassifizierter Nahrungsmittel hervorgeht.

6. Haushalts-Elektrokühlschrank nach einer der Ansprüche 4 oder 5, dadurch gekennzeichnet dass die Tabellen (13) Nahrungsmittel mit einem latenten Inhalt an Gefrierwärme unter 50 Kcal/kg, bzw. mit Schwankungen zwischen 50—60 oder 60—70 oder 70—80 kcal/kg anzeigen.

7. Haushalts-Elektrokühlschrank nach einer der Ansprüche 4—6, dadurch gekennzeichnet dass die Tabellen (13) Nahrungsmittelsinnbilder aufweisen.

8. Haushalts-Elektrokühlschrank nach einer der Ansprüche 4—6, dadurch gekennzeichnet dass die Tabellen (13) aus Aufstellungen von Nahrungsmitteln bestehen.

9. Haushalts-Elektrokühlschrank nach Anspruch 1, mit einem Rechenschieber (3) zum Errechnen der Gefrierzeiten von ersten Nahrungsmittelmengen in Gewicht ausgedrückt, die sich im Innern des Gefrierfaches eines Kühlschrankes befinden und um festzulegen wieviel Nahrungsmittelmenge ausser der schon vorhandenen noch innerhalb von 24 h im Kühlfach untergebracht werden kann, dadurch gekennzeichnet dass die erste Skala (34) für die ersten während einer ersten Phase eingefroreren Nahrungsmittelmengen dient und dass die zweite Skala (36) für die Gefrierzeiten der ersten Nahrungsmittelmenge dient, wo das erste Teil (21) eine dritte Skala (35) für die Extramengen an Nahrungsmitteln die in einer späteren Phase nach der ersten Phase einzufrieren sind enthält, jede mit Bezug auf einen anderen Typ von Kühlschrank, sowie mit mehreren vierten Skalen (37), welche die Dauer der ersten Phase anzeigen; die Werte der vierten Skala (37) entsprechen den Werten der zweiten Skala (36) plus einer vorgegebenen Menge. Das andere Teil (22) besitzt eine erste (28) und eine zweite Markierung (29) sowie mindestens ein Fenster (26) für jede der zweiten (36) und vierten Skalen (37) zur Anzeige der Werte auf den zweiten und vierten Skalen wenn die erste (28) und zweite Markierung (29) auf Werte an den ersten (34) und dritten Skalen (35) eingestellt sind und die Fenster (26) vorgesehen sind um den Kühlschranktyp anzuzeigen, auf den sich die Werte der zweiten (34) und dritten Skalen (37) beziehen.

10. Haushalts-Elektrokühlschrank nach Anspruch 9, dadurch gekennzeichnet dass die ersten (34), die zweiten (36) un die vierten Skalen (37) konzentrisch und parallel zum Rand einer dritten Scheibe (21) mit vorgegebenem Durchmesser verlaufen, wo die dritte Scheibe (21) eine vierte konzentrisch Scheibe (22) mit kleinerem Durchmesser und beweglich gegenüber der dritten Scheibe (21) aufweist um die zweite (36) und vierte Skala (37) zu überdecken, wo die erste (34) und dritte Skala (35) sich neben einem ersten (24) und zweiten Abschnitt (25) auf der vierten Scheibe (22) befinden und die Abschnitte erste (28) und zweite Markierungen (29) sowie eine erste und zweite Reihe von Fenstern (26) aufweisen, wo die Fenster im ersten Abschnitt (24) vorgesehen sind um anzuzeigen, wenn die erste Markierung (28) auf einen Wert der ersten Skala (34) eingestellt ist, die Werte auf den zweiten Skalen (36) für die benötigte Gefrierzeiten in der ersten Phase der Nahrungsmittelmenge die aus der ersten Markierung (28) auf der ersten Skala (34) hervorgeht und die zweite Markierung vorgesehen ist um auf der dritten Skala (35) die Nahrungsmittelmengen anzugeben, die in den nachfolgenden Phasen eingefroren werden können, wenn die Fenster (26) im zweiten Abschnitt (25) so angeordnet sind und auf der vierten Skala (37) die Werte anzeigen, die den Werten auf den zweiten Skalen (36) entsprechen, die vorher an den Fenstern (26) im ersten Abschnitt (24) erschienen waren als die erste Markierung (28) eingestellt wurde.

11. Haushalts-Elektrokühlschrank nach Anspruch 1 mit einem Rechenschieber (3) zur Errechnung der Gefrierzeiten von im Kühlfach befindlichen Nahrungsmitteln, dadurch gekennzeichnet dass die erste Skala (32) zum Auswiegen der Nahrungsmittel die einzufrieren sind und die zweite Skala (33) zur benötigten Einfrierzeit der Nahrungsmittel dient.

12. Haushalts-Elektrokühlschrank nach Anspruch 11, dadurch gekennzeichnet dass der Rechenschieber (3) eine dritte Scheibe (21) mit vorgegebenem Durchmesser aufweist, auf der konzentrisch und parallel zum Rande die erste Skala (32) und mehrere zweite Skalen (33) vorgesehen sind, jede mit Bezug auf einen unterschiedlichen Typ von Kühlschrank, sowie eine vierte Scheibe (22) mit kleinerem Durchmesser und beweglich gegenüber der dritten Scheibe (21), mit einem Fenster (26) für jede der zweiten Skalen (33) und mit der Markierung (27) um die zweite Skala (33) zu überdecken, wo die Fenster längs eines Radius der vierten Scheibe (22) vorgesehen und gekennzeichnet sind um verschiedene Typen von Kühlschränken anzuzeigen.

13. Haushalts-Elektrokühlschrank nach Anspruch 1 mit einem Rechenschieber (3) für die genaue Einstellung eines Thermostaten in Abhängigkeit von der Raumtemperatur um den Stromverbrauch des Kühlschrankes zu reduzieren, dadurch gekennzeichnet dass die erste Skala (39) für die Raumtemperatur innerhalb eines vorgewählten Intervalles dient und dass die zweite Skala (41) alphanumerische Bezugszeichen aufweist, welche die verschiedenen Einstellungen des Thermostaten angeben.

14. Haushalts-Elektrokühlschrank nach Anspruch 13, dadurch gekennzeichnet dass der Rechenschieber (3) eine dritte Scheibe (21) mit vorgegebenem Durchmesser aufweist, die konzentrisch zur ersten Skala (39) und parallel zum Rand montiert ist und mehrere zweite Skalen (41), jede für eine anderen Typ von Kühlschrank, sowie eine vierte Scheibe (22) mit kleinerem Durchmesser und beweglich gegenüber der dritten Scheibe (41) um die zweiten Scheiben (41) zu überdecken und mit einem Fenster (26) für jede der zweiten Skalen (41) und für die Markierung (40), wo die Fenster sich längs eines Radius der vierten Scheibe (22) befinden, sowie eine Markierung (31) zur Anzeige der verschiedeneen Kühlschränke.

15. Haushalts-Elektrokühlschrank nach irgendeiner der Ansprüche 10—14, dadurch gekennzeichnet dass die dritte Scheibe (21) fünfte Scheiben (32a, 36a, 37a, 41a) zusammen mit den zweiten Scheiben (33, 36, 41) und der vierten Scheibe (41) verbunden aufweist um den benötigten Stromverbrauch anzuzeigen und um die aus den zweiten (32, 34, 39) und der drittern Scheibe (35) hervorgehenden Leistungen zu erhalten, wo die vierte Scheibe (22) die fünften Scheiben (33a, 36a, 37a, 41) mit Fenstern (26) überdeckt um auf den Skalen (33a, 36a, 37a, 41a) die Werte zusammen mit den Werten auf den zweiten Skalen (33, 36, 37, 41) und auf der vierten Skala anzuzeigen.

**Revendications**

1. Appareil électroménager réfrigérant, en particulier congélateur de ménage, ayant un compartiment congélateur pour conserver differents types de aliments, caractérisé en ce qu'une règle à calcul (1, 2, 3), pour calculer les paramètres de fonctionnement, est placée à l'intérieur du dit compartiment congélateur, la dite règle à calcul comprenant au moins une partie fixe (5, 21) et une partie mobile (6, 22), et un thermomètre (7) solidement logé sur une des dites parties (5, 6, 31, 22), en ce que un premier des dits paramètres de fonctionnement est le poids de l'un des aliments et un deuxième des dits paramètres est le temps de congélation, et en ce qu'une des dites parties (5, 21) est pourvue d'au moins une première échelle (19, 32, 34, 35, 39) avec les valeurs d'un des dits paramètres de fonctionnement, utilisé comme la première donnée de input pour le dit calcul, et au moins une deuxième échelle (20, 33, 36, 37, 41) avec valeurs d'un autre des dits paramètres de foncionnement; et en ce que la deuxième des dites parties (6, 22) est destinée pour cacher la dite deuxième échelle (20, 33, 36, 37, 41) et elle est pourvue d'au moins un marqueur (16, 27, 28, 29, 40) et de fenêtres (10, 26) avec valeurs d'un autre paramètre utilisé comme une deuxième donnée de input, imprimée en correspondance des fenêtres, pour détecter à travers chaque fenêtre au moins une valeur sur la dite deuxième échelle (20, 33, 36, 37, 41) comme donnée de output quand le dit marqueur (16, 27, 28, 40) est réglé sur la dite première échelle (19, 32, 34, 35, 39) ou vice versa.

2. Appareil électroménager réfrigérant selon la revendication 1 avec la dite règle à calcul (2) apte à calculer les temps de congélation des aliments placés à l'intérieur d'un congélateur avec un contrôle de la congélation, et destiné pour congéler un poids déterminé d'aliments dans les 24 heures quand le dit contrôle est branché, caractérisé en ce que la dite première échelle (19) sert pour des fractions du dit poids prédéterminé d'aliments, en ce que la dite deuxième échelle (20) sert por les temps minimes requis pour congéler différentes fractions du dit pois prédéterminé quand le dit contrôle est branché.

3. Appareil électroménager réfrigérant selon la revendication 2, caractérisé en ce que les dites première (19) et deuxième (20) échelles sont concentriques et parallèles au bord circulaire (21) d'un premier disque (5) ayant un diamètre prédéterminé, le dit premier disque (5) étant pourvu d'un deuxième disque concentrique (6), ayant un diamètre moindre du premier et qui se déplace autour du même, en sorte de cacher la deuxième échelle (20) et pourvu d'un marqueur (16) complet avec une plaque (18) indiquante le dit poids prédéterminé, et de plusieures fenêtres rectangulaires (10) placées autour d'une circonférence concentrique avec le dit premier disque (5) dans le but de révéler simultanément plusieures valeurs sur la dite deuxième échelle (20) alors que le dit marqueur (16) est placé sur une valeur sur la dite première échelle (19), chacune des dites fenêtres (10) étant marquée (15).

4. Appareil électroménager réfrigérant selon la revendication 3, caractérisé en ce qu'une face (14) sur un (6) des dits disques (5, 6) présente plusieurs tableaux (13), un pour chacune des dites fenêtres (10), chaque tableau (13) étant marqué dans la même façon qu'une fenêtre correspondante (10) dans le but d'indiquer une catégorie homogène d'aliments su a base du contenu en eau.

5. Appareil électroménager réfrigérant selon la revendication 3, caractérisé en ce qu'une face (14) sur le dit deuxième disque (6) présente un tableau (13), près de chacune des dites fenêtres (10), indiquant une catégorie déterminée d'aliments classés sur la base du contenu en eau.

6. Appareil électroménager réfrigérant selon la revendication 4 ou 5, caractérisé en ce que les dits tableaux (13) indiquent des aliments avec un contenu de chaleur latente inférieur à 50 Kcal/kg, ou bien variable entre 50 et 60, ou entre 60 et 70, ou entre 70 et 80 Kcal/kg.

7. Appareil électroménager réfrigérant selon une quelconque des revendications 4—6, caractérisé en ce que les dits tableaux (13) présentent des symboles d'aliments.

8. Appareil électroménager réfrigérant selon une quelconque des revendications 4—6, caractérisé en ce que les dits tableaux (13) sont constitués par les noms des aliments.

9. Appareil électroménager réfrigérant selon la revendication 1 avec la dite règle à calcul (3) apte à calculer les temps de congélation de premières quantités d'aliments, exprimées en poids, placées à l'intérieur du compartiment congélateur d'un réfrigérateur à deux compartiments, et pour calculer combien de aliment extra peut être congélé dans le dit congélateur après les dites premières quantités et dans un espace de 24 heures, caractérisé en ce que la dite première échelle (34) sert pour les dites premières quantités d'aliments congélés dans une première phase, et en ce que la dite deuxième échelle (36) sert pour les temps de congélation des dites premières quantités d'aliments; la dite première partie (21) étant pourvue d'une troisième échelle (35) pour les dites quantités extra d'aliments congélés dans des phases successives à la dite première phase, avec plusieurs des dites deuxièmes échelles (36), correspondantes chacune à un différent type de réfrigérateur, et avec plusieures quatrièmes échelles (37) indiquantes la longueur de la dite première phase; les valeurs sur les dites quatrièmes échelles (37) correspondant à des valeurs sur les dites deuxièmes échelles (36) plus une quantité préétablie; et l'autre dite partie (22) étant pourvue d'un premier (28) et d'un deuxième (29) marqueur et d'au moins une fenêtre (26) pour chacune des dites deuxièmes (36) et quatrièmes (37) échelles dans le but de révéler une valeur sur les dites deuxièmes et quatrièmes échelles quand les dits premiers (28) et deuxièmes (29) marqueurs sont établis sur des valeurs sur les dites premières (34) et troisièmes (35) échelles respectivement, les dites fenêtres (26) étant marquées (31) pour indiquer le type de réfrigérateur auquel se rapportent les valeurs sur les correspondantes deuxièmes (36) et quatrièmes (37) échelles.

10. Appareil électroménager réfrigérant selon la revendication 9, caractérisé en ce que les dites premières (34), troisièmes (35), deuxièmes (36) et quatrièmes (37) échelles sont concentriques et parallèles au bord circulaire d'un troisième disque (21) ave un diamètre préétabli, le dit troisième disque (21) étant pourvu d'un quatrième disque concentrique (22), avec diamètre moindre et mobile par rapport au troisième (21) dans le but de cacher les dites deuxièmes (36) et quatrièmes (37) échelles, les premières (34) et les troisièmes (35) échelles étant adjacentes à une première (24) et à une deuxième (25) section du dit quatrième disque (22), les dites sections étant pourvues des dits premier (28) et deuxième (29) marqueur respectivement et d'une première et d'une deuxième série des dites fenêtres (26); les dites fenêtres (26) dans la dite première section (24) étant envisagées pour révéler, quand le dit premier marqueur (28) est établi sur une valeur de la dite première échelle (34), les valeurs sur les dites deuxièmes échelles (36) par rapport au temps requis pour la congélation, dans la dite première phase, de la quantité d'aliments indiquée par le premier marqueur (28) sur la dite première échelle (34), et ledit deuxième marqueur (29) étant envisagé pour indiquer, sur la dite troisième échelle (35), la quantité d'aliments qui peuvent être congélés dans les phases suivantes, quand les dites fenêtres (26) sur la dite deuxième section (25) sont disposées de façon à révéler sur les dites quatrièmes échelles (37) les valeurs correspondantes aux valeurs sur les dites deuxièmes échelles (36) présentées précédemment dans des fenêtres (26) dans la première section (24) quand le dit premier marqueur (28) avait été établi.

11. Appareil électroménager réfrigérant selon la revendication 1 avec la dite règle à calcul (3) apte à calculer les temps de congélation des aliments placés à l'intérieur d'un congélateur, caractérisé en ce que la dite première échelle (32) sert pour le poids des aliments qui son congélés et la dite deuxième échelle (33) por le temps requis pour congéler le dit poids d'aliments.

12. Appareil électroménager réfrigérant selon la revendication 11, caractérisé en ce que la règle à calcul (3) comprend un troisième disque (21) avec un diamètre fixé, sur lequel sont placées concentriquement et paralléles à son bord circulaire la dite première échelle (32) et plusieures des dites deuxièmes échelles (33) chacune rélative à un different type de congélateur; et un quatrième disque (22) de diamètre moindre et mobile par rapport au troisième (21), avec une des dite fenêtres (26) pour chacune des dites deuxièmes échelles (33) et avec le dit marqueur (27), dans le but de cacher les dites deuxièmes échelles (33), les dites fenêtres étant placées selon un rayon du dit quatrième disque (22) et marquées pour indiquer differents types de congélateurs.

13. Appareil électroménager réfrigérant selon la revendication 1 avec la dite règle à calcul (3) apte pour calculer l'exacte établissement d'un thermostat du réfrigérateur en fonction de la température ambiante dans le but de minimiser la consommation d'énergie du dit réfrigérateur, caractérisé en ce que la dite première échelle (39) sert pour la température ambiante dans un intervalle fixé, et en ce que la deuxième échelle (41) porte des données alphanumériques indiquant les différents réglages du dit thermostat.

14. Appareil électroménager réfrigérant selon la revendication 13, caractérisé en ce que la règle à calcul (3) comprend un troisième disque (21) avec un diamètre fixé, placé concentriquement avec la dite première échelle (39) parallélement à son bord circulaire et à plusieures des dites deuxièmes échelles (41), chacune rélative à un différent type de réfrigérateur, et un quatrième disque (22) de diamètre moindre et mobile par rapport au troisième (21) dans le but de cacher les deuxièmes échelles (41) et pourvu d'une des dites fenêtres (26) pour chacune des dites deuxièmes échelles (41) et pour le dit marqueur (40), les dites fenêtres (26) étant placées le long d'un rayon du dit quatrième disque (22) et d'un marqueur (31) pour indiquer differents types de réfrigérateurs.

15. Appareil électroménager réfrigérant selon une quelconque des revendications 10—14, caractérisé en ce que le dit troisième disque (21) est pourvu de cinquièmes échelles (32a, 36a, 37a, 41a) respectivement associées avec les dites deuxièmes (33, 36, 41) et quatrième (37) échelles pour indiquer la consommation d'énergie relevé en kw.h requis pour obtenir la performance indiquée sur les deuxièmes (32, 34, 39) et troisième (35) échelles, le dit quatrième disque (22) cachant les dites cinquièmes échelles (33a, 36a, 37a, 41a) avec des fenêtres (26) pour révéler les valeurs sur le dites cinquièmes échelles (33a, 36a, 37a, 41a) avec les valeurs sur les dites deuxièmes (33, 36, 41) et quatrième échelles.

Fig. 1

Fig. 2

0 099 541

a)

| | A | B | C | D |
|---|---|---|---|---|
| LIVER | | ● | | |
| LAMB | ● | | | |
| HAM | ● | | | |
| APRICOTS | | | ● | |
| LEMONS | | | | ● |
| CABBAGE | | | | ● |
| CELERY | | | | ● |
| GRAPES | | | ● | |
| COD | | | ● | |
| FATTY FISH | | ● | | |
| ICE - CREAM | | ● | | |
| MILK | | | ● | |
| BREAD | ● | | | |

| P | C.L. |
|---|---|
| A | < 50 |
| B | 50 ÷ 60 |
| C | 60 ÷ 70 |
| D | 70 ÷ 80 |

b)

Fig. 3